# EUROPEAN PATENT SPECIFICATION

(11) **EP 4 513 478 B1**
(45) Date of publication and mention of the grant of the patent: **13.05.2026**
(21) Application number: 24195771.1
(22) Date of filing: 22.08.2024
(51) Int. Cl.: G10L 13/00, G10L 13/04, G06F 3/04817, G10L 13/033, G08B 17/00

(54) **FIRE ALARM VOICE GENERATOR**
SPRACHGENERATOR FÜR FEUERALARME
GÉNÉRATEUR VOCAL D'ALARME INCENDIE

(30) Priority: 23.08.2023 US 202318454536
(43) Date of publication of application: 26.02.2025
(73) Proprietor: Tyco Fire & Security GmbH, 8212 Neuhausen am Rheinfall (CH)
(72) Inventor: DORANT, Dean, 8212 Neuhausen am Rheinfall, Schaffhausen (CH); FORTIN, Maxime, 8212 Neuhausen am Rheinfall, Schaffhausen (CH); HOUNKPATIN, Arius, 8212 Neuhausen am Rheinfall, Schaffhausen (CH); ROUSSEAU, William, 8212 Neuhausen am Rheinfall, Schaffhausen (CH)
(74) Representative: Meissner Bolte Nürnberg

(56) References cited:
- US-B1- 8 077 877
- POTTER SIGNAL: "Potter's Integrated Voice System", 25 January 2022 (2022-01-25), XP093225914, Retrieved from the Internet <URL:https://www.youtube.com/watch?v=OdSDol9Bjls> [retrieved on 20241119]
- PHUONG THUY: "How to Use Third-Party Text-to-Speech Voices in ActivePresenter 9", 10 August 2023 (2023-08-10), pages 1 - 10, XP093225921, Retrieved from the Internet <URL:https://atomisystems.com/tutorials/ap9/use-third-party-text-to-speech-voices-activepresenter-9/> [retrieved on 20241119]

## Description

### BACKGROUND

### Technical Field

The described aspects relate to configuring auto-generated audio voice messages from text using a neural voice network for use in voice alarm notification devices of an alarm system, and to a related method.

### Introduction

Aspects of the present disclosure relate generally to programming voice alarm notification devices, and more particularly, to generating audio voice messages from text using a neural voice network.

The video Potter Signal: "Potter's Integrated Voice System", discloses a fire alarm system enabling operators to add customized voice messages generated by neural text-to-speech. It shows a graphical user interface with icons for adding, playing, deleting voice messages.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

An example aspect includes a method comprising providing a user interface for configuring an alarm control panel to generate audio voice messages, wherein the user interface displays at least a text field for inputting text, a list for selecting audio configuration settings, a first icon for generating text-to-speech, and a second icon for saving. The method further includes obtaining, via the text field in user interface, text to be converted to an audio voice message.

Additionally, the method further includes obtaining, via the list in the user interface, audio configuration settings for generating the audio voice message. Additionally, the method further includes transmitting, to a cloud platform in response to receiving a selection of the first icon via the user interface, a text-to-speech request comprising the text to be converted and the audio configuration settings. Additionally, the method further includes obtaining, from the cloud platform, a speech response generated using a neural voice network based on the text and the audio configuration settings. Additionally, the method further includes storing the speech response in an audio file library, in response to receiving a selection of the second icon via the user interface, for playback in the alarm control panel.

Another example aspect includes an apparatus comprising one or more memories and one or more processors coupled with the one or more memories and configured, individually or in combination, to perform the following operations. The one or more processors are configured to provide a user interface for configuring an alarm control panel to generate audio voice messages, wherein the user interface displays at least a text field for inputting text, a list for selecting audio configuration settings, a first icon for generating text-to-speech, and a second icon for saving. The one or more processors are further configured to obtain, via the text field in user interface, text to be converted to an audio voice message. Additionally, the one or more processors are further configured to obtain, via the list in the user interface, audio configuration settings for generating the audio voice message. Additionally, the one or more processors are further configured to transmit, to a cloud platform in response to receiving a selection of the first icon via the user interface, a text-to-speech request comprising the text to be converted and the audio configuration settings. Additionally, the one or more processors are further configured to obtain, from the cloud platform, a speech response generated using a neural voice network based on the text and the audio configuration settings. Additionally, the one or more processors are further configured to store the speech response in an audio file library, in response to receiving a selection of the second icon via the user interface, for playback in the alarm control panel.

Another example aspect includes an apparatus comprising means for providing a user interface for configuring an alarm control panel to generate audio voice messages, wherein the user interface displays at least a text field for inputting text, a list for selecting audio configuration settings, a first icon for generating text-to-speech, and a second icon for saving. The apparatus further includes means for obtaining, via the text field in user interface, text to be converted to an audio voice message. Additionally, the apparatus further includes means for obtaining, via the list in the user interface, audio configuration settings for generating the audio voice message. Additionally, the apparatus further includes means for transmitting, to a cloud platform in response to receiving a selection of the first icon via the user interface, a text-to-speech request comprising the text to be converted and the audio configuration settings. Additionally, the apparatus further includes means for obtaining, from the cloud platform, a speech response generated using a neural voice network based on the text and the audio configuration settings. Additionally, the apparatus further includes means for storing the speech response in an audio file library, in response to receiving a selection of the second icon via the user interface, for playback in the alarm control panel.

Another example aspect includes a computer-readable medium having instructions stored thereon, wherein the instructions are executable by one or more processors, individually or in combination, to provide a user interface for configuring an alarm control panel to generate audio voice messages, wherein the user interface displays at least a text field for inputting text, a list for selecting audio configuration settings, a first icon for generating text-to-speech, and a second icon for saving. The instructions are further executable to obtain, via the text field in user interface, text to be converted to an audio voice message. Additionally, the instructions are further executable to obtain, via the list in the user interface, audio configuration settings for generating the audio voice message. Additionally, the instructions are further executable to transmit, to a cloud platform in response to receiving a selection of the first icon via the user interface, a text-to-speech request comprising the text to be converted and the audio configuration settings. Additionally, the instructions are further executable to obtain, from the cloud platform, a speech response generated using a neural voice network based on the text and the audio configuration settings. Additionally, the instructions are further executable to store the speech response in an audio file library, in response to receiving a selection of the second icon via the user interface, for playback in the alarm control panel.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, wherein dashed lines may indicate optional elements, and in which:
FIG. 1 is a block diagram of an example of a fire voice alarm notification device of a fire alarm system.
FIG. 2 is a block diagram of an example of an overall architecture of the fire alarm voice generator system.
FIG. 3 is a diagram illustrating a call flow between a fire alarm voice generator and a cloud platform.
FIG. 4 is a block diagram of an example of a computer device having components configured to provide a user interface for configuring an alarm control panel to generate audio voice messages;
FIG. 5 is a flowchart of an example of a method for providing a user interface for configuring an alarm control panel to generate audio voice messages;
FIG. 6 is a flowchart of additional aspects of the method of Fig. 5;
FIG. 7 is a flowchart of additional aspects of the method of Fig. 5;
FIG. 8 is a flowchart of additional aspects of the method of Fig. 5;
FIG. 9 is a flowchart of additional aspects of the method of Fig. 5;
FIG. 10 is a flowchart of additional aspects of the method of Fig. 5; and
FIG. 11 is a flowchart of additional aspects of the method of Fig. 5.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Various aspects of the present disclosure provide a method, apparatus, and computer program product for providing a user interface to generate audio voice messages for alarm control panels.

Alarm control panels are often configured with a large list of audio voice messages that are to be played during emergency scenarios. These voice recordings are generally pre-recorded by a person in a professional recording studio. Accordingly, this is a time consuming and expensive process that can take roughly three to four weeks between requesting the audio voice messages and enlisting voice actors to record the requested messages, finding studio engineers to edit and clean up the audio recordings, and then making the audio voices available to a user. As an example, utilizing studio engineers may cost a set amount per studio session with an increase of an additional cost for each 50 phrases. In addition, an applications engineering team may need to generate as many as 50 audio message per day for alarm control panels. The cost may multiply if additional languages are requested.

As noted above, current alarm control panels have audio voice messages that must be requested by application engineers (or users), manually recorded by voice engineers, mixed and mastered by professional studio engineers, and then loaded onto the alarm control panels by the application engineers. In addition, the audio voice recordings may be inconsistent since different voice actors may be involved in recording the audio voice recordings. Furthermore, a particular voice actor's voice may also be inconsistent due to limitations of a human voice.

Thus, there is a need for an improved process to configure and generate audio voice messages for use in alarm control panels. The present disclosure provides a user interface with a text-to-speech application that will allow alarm panel programmers to auto-generate audio voice messages immediately using neural voice networks. The text-to-speech application may utilize a text-to-speech service with a neural voice network that is implemented on a cloud platform to provide high-quality and natural-sounding voice messages that are automatically generated from text. Because the text-to-speech service is utilizing a neural voice network, the text-to-speech service may include additional different options for voice types, accents, and languages to maximize customizability for different markets and geographic regions.

This method of configuring and generating audio voice messages for alarm control panels solves technical problems involved with generating consistent and high quality audio voice recordings and configuring the alarm control panels to use the audio voice recordings. As described above, the process currently takes weeks to generate audio voice recordings due to the need for hiring professional voice actors and studio engineers to manually record voice recordings based on requested text, to edit and master the voice recordings such that the quality (e.g., bitrate) is acceptable for alarm control panels, and to load the voice recordings onto the fire alarm control panels. In various aspects, a user interface (UI) with a text-to-speech application capable of generating and storing audio messages immediately based off of inputted text may be implemented. In this way, users may use the UI to automatically generate any number of audio voice recordings by simply providing text input and various audio configuration settings to a neural voice network. Accordingly, the easy to use and intuitive UI allows users to generate large batches of voice customizations in different languages across global markets. In addition, if a user ever wants to supplement or replace a batch of audio voice recording that was previously recorded in the future, the user may apply the same audio configuration settings used in the previous batch of audio voice recordings to ensure consistency in the supplemental or replacement audio voice recordings with the previous batch of audio voice recordings.

In addition, there is also a potential for playing non-fire-alarm audio voice messages that use the fire alarm system audio equipment. For example, PA announcements may be played over the fire alarm system's speaker system, assuming that there is no fire or security alarm in progress, which would have priority.

Various aspects of the present disclosure are especially beneficial in automatically generating high quality audio voice recordings by utilizing a UI to enter text to be generated into an audio voice message, to configure audio configuration parameters, and to connect with a text-to-speech service implemented on a cloud platform. Accordingly, generating the audio voice recordings from text-to-speech requests using the text-to-speech service is instantaneous.

In various aspects, the cloud platforms with a neural voice network may have access to hundreds of neural voices spanning hundreds of languages and tones. A neural voice may refer to a neural network that models a human voice and can produce audio based on text input. This allows the text-to-speech high quality audio voice recordings to provide an easy and efficient way for alarm programmers (e.g., fire alarm programmers) to easily experiment with, customize and generate audio voice recordings in different voices, tones, and languages. In addition, neural voice networks may also allow a user to record his or her own voice and train the neural voice network to use the voice of the user to generate text-to-speech requests.

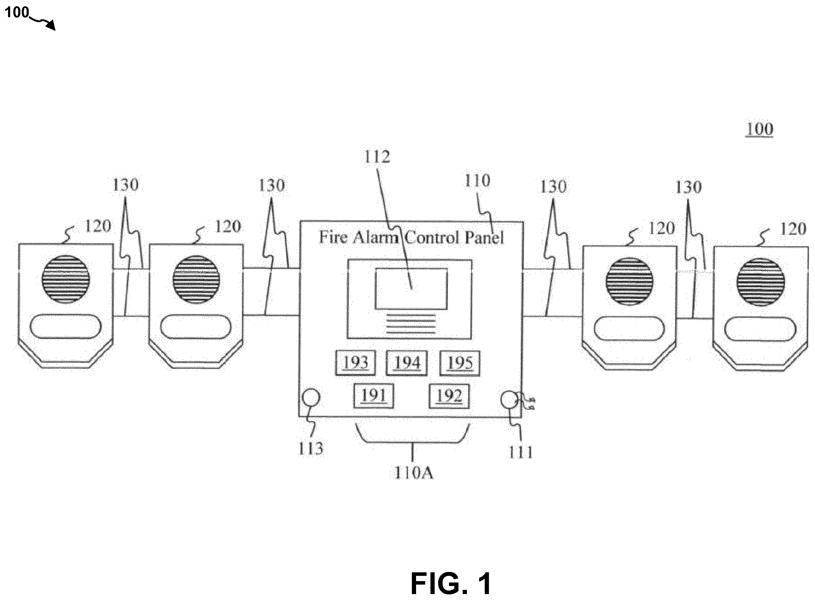

Referring to FIG. 1, a fire notification system 100, also referred to as a fire alarm system, is shown, in accordance with an example aspect. The fire notification system 100 is a system for providing notification in the case of a fire. As an example, the fire notification system may provide an audio message of "Attention, attention. This is an emergency. There is a fire in the building. Please evacuate to the nearest stairwell." In another example, the fire notification system may provide very customized audio messages such as "Attention, attention. There is a fire in the library. Please evacuate through the front wing in a calm and orderly manner."

In accordance with various aspects of the disclosure, fire notification system 100 may also include remote devices 120, which can be capable of detecting a fire or other emergency condition and/or relaying audible, visual, or other stimuli to alert building occupants of the fire or other emergency conditions. For example, a remote device 120 can include, but is not limited to, any one or any combination of the following: a smoke detector, a heat detector, a speaker, a microphone, a buzzer, a fire alarm switch (e.g., a pull switch), a light (e.g., LED), a relay, and so forth.

Fire notification system 100 can be any system that includes a fire alarm control panel 110 and a plurality of remote devices 120 interconnected by fire notification system wiring 130.

The fire alarm control panel 110 includes one or more memories 191, individually or in combination, having instructions for configuring the fire alarm control panel and to load audio voice message recordings. The fire alarm control panel 110 further includes one or more processors 192, each coupled to at least one of the one or more memories 191 and configurable to execute the instructions and store/load the audio voice message recordings. The one or more memories 191 and the one or more processors 192 implement a controller as described in further detail herein.

In an aspect, fire alarm control panel 110 further includes a connection port 193 configured to connect to a user device such as a laptop, a tablet, a smart phone, and so forth, an input device 194 configured to receive user inputs, a transceiver 195 for communicating with remote devices (control station transceivers, smart phones, and so forth), and a display 112 configured to display the UI and/or display information relating to the configuring and operating of the remote devices 120 and the fire alarm control panel 110. In an aspect, fire alarm control panel 110 may include a speaker 113 for emitting an alarm and outputting audio voice message, or other information and/or a light source (LED) 111 for indicating a mode or a status of the fire alarm control panel 110 and/or the remote devices 120.

As used herein, a processor, at least one processor, and/or one or more processors, individually or in combination, configured to perform or operable for performing a plurality of actions is meant to include two or more different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include a first processor configured or operable to perform a first subset of X, Y, and Z (e.g., to perform X) and a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

In various aspects, the controller 110a is configured to make it easy for a user (e.g., technical and/or applications engineer) and/or the fire notification system 100 itself to import the audio voice messages as .wav files for to the fire alarm control panel 110 and remote devices 120. In this way, efficient and customizable audio voice messages can be easily stored to computer readable storage medium and imported to the fire alarm control panel 110 and/or remote devices 120.

Remote devices 120 may be powered by an Alternating Current (AC) or Direct Current (DC) power source (e.g., a battery). Remote devices 120 can include a light notification module and a sound notification module. The light notification module can be implemented as a light emitting device or any component in remote devices 120 that alerts occupants of an emergency by emitting a visible light signal. In some aspects, remote devices 120 emit strobe flashes to alert building occupants of an emergency situation. A sound notification module can be a speaker or any component in the remote devices 120 that alerts occupants of an emergency by emitting the audio voice messages. In some aspects, which should not be construed as limiting, remote devices 120 may emit one or more audible signals.

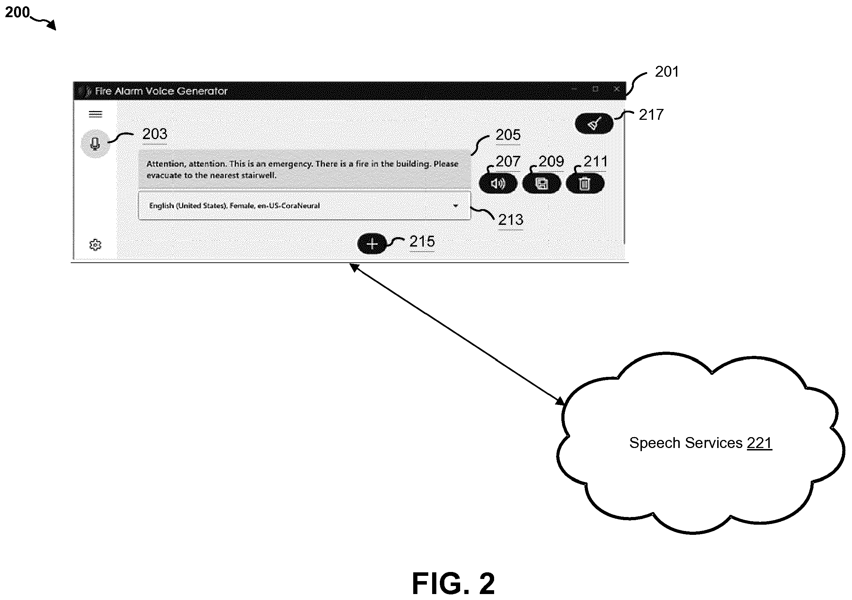

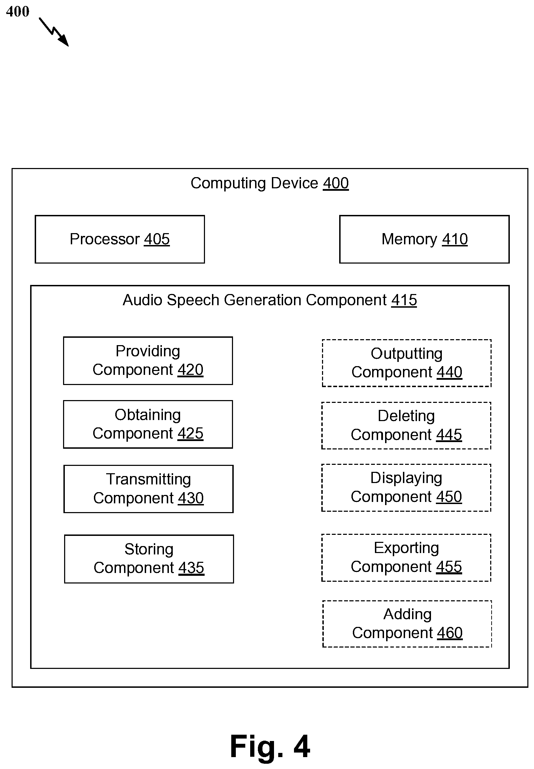

Referring to FIG. 2, an example 200 of an overall architecture of the fire alarm voice generator system implemented in a computing device (e.g., computing device 400 shown in FIG. 4) is shown, in accordance with an example aspect.

The fire alarm voice generator application (or UI) 201 utilizes a cloud platform's text-to-speech service 221 to generate audio voice messages based on text input by a user. Specifically, the cloud platform's text-to-speech service 221 may include a network of neural voices to provide high quality, natural sounding speech generated from text input. For example, the cloud platform's text-to-speech service 221 may listen for incoming text-to-speech requests and instantaneously generate speech according to user inputs.

In some examples, the cloud platform's text-to-speech service 221 may require a authentication key or (subscription key) to be provided to the application for authentication with the text-to-speech service 221. As an example, when requests are made to the cloud platform, the key will be provided by the fire alarm voice generator application 201 and validated before the text-to-speech service 221 will be provided. As another example, when the key cannot be validated by the text-to-speech service 221 then the text-to-speech service 221 may generate an error message.

The fire alarm voice generator application 201 may accept text inputted by a user via a text field 205 and provide UI elements (e.g., buttons) such as a generate speech button 203 to generate the text-to-speech request, play button 207 to playback the speech response, save button 209 to save the speech response, delete button 211 to delete the speech response, select audio configuration settings 213 (e.g., via a drag down menu) to select different audio configuration settings, add button 215 to add an additional text field with corresponding UI elements, and/or clear button 217 to clear the current session. Accordingly, the user may utilize a computing device to connect to and utilize the text-to-speech service 221 implemented on a cloud platform.

It will be understood by those skilled in the art that the specific UI elements and arrangements indicated in the fire alarm voice generator application 201 are not limited to the described buttons, placement, and to the described actions. The technical solution according to the present disclosure may include more or fewer UI elements, or include different UI elements, such as command elements associated with different actions, or use a different arrangement of the UI elements. In addition, even though the text-to-speech service 221 is shown as being implemented on a cloud platform, the text-to-speech service 221 may be implemented on a local computing device.

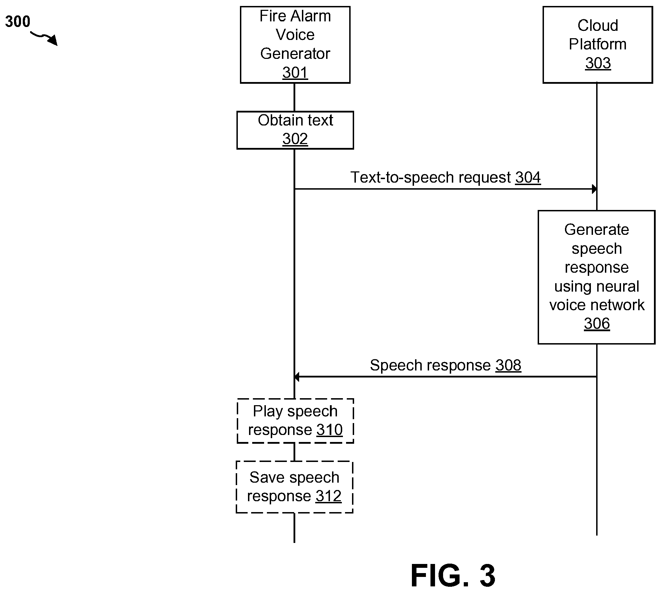

Referring to FIG. 3, an example 300 of a call flow between a fire alarm voice generator 301 (e.g., fire alarm voice generator application 201) and a cloud platform 303 (e.g., text-to-speech service 221) is shown, in accordance with an example aspect. Optional aspects are illustrated in dashed lines.

At block 302, the fire alarm voice generator 301 is configured to obtain text entered by a user. For example, referring back to FIG. 2, the fire alarm voice generator application 201 includes a text field to receive text from the user. In some examples, the fire alarm voice generator application 201 may include drag and drop options to generate customizable phrases by using pre-recorded phrases that may be listed in a separate portion of the user interface. Alternatively, the text field may receive input from a virtual or physical keyboard.

At block 304, the fire alarm voice generator 301 is configured to transmit a text-to-speech request to a text-to-speech service in the cloud platform 303. In some examples, the text-to-speech request may include a text, authentication key, or additional criteria. As an example, the additional criteria may be pre-selected or customized from the audio configuration settings 213. Specifically, the audio configuration settings may include at least a language, a gender, a tone, bit-rate, or a voice profile. As an example, referring back to FIG. 2, a user may select the generate speech button 203 to transmit the text-to-speech request to the text-to-speech service 221 in the cloud platform.

At block 306, the cloud platform 303 may be configured to generate a speech response based on criteria defined by the user (e.g., text, language, speech accent, gender, etc.) using a neural voice network. In examples, where the text-to-speech request includes a authentication key, the text-to-speech service will validate the authentication key before providing the text-to-speech service. In some examples, if the authentication key cannot be validated by the text-to-speech service, then the text-to-speech service will not provide the text-to-speech service and return an error message.

At block 308, the cloud platform 303 may be configured to transmit the speech response to the fire alarm voice generator 301. In some examples, the play button 207, the save button 209, and the delete button 211 will be initially displayed as disabled (e.g., greyed out). Once the cloud platform 303 transmits the speech response to the fire alarm voice generator 301 then the play button 207, the save button 209, and the delete button 211 may be enabled to alert the user that the generated speech response is ready for playback, storing, or deleting.

Optionally, at block 310, the fire alarm voice generator 301 may play back the speech response on the computing device to provide the user with instant feedback. As an example, referring back to FIG. 2, a user may select the play button 207 on the fire alarm voice generator application 201 to play back to the speech response.

Optionally, at block 312, the fire alarm voice generator 301 may store the speech response in an audio library database or a computer readable storage medium. As another example, referring back to FIG. 2, a user may select the save button 209 on the fire alarm voice generator application 201 to store the speech response to memory as a .wav file. The speech response may then be imported in other fire alarm control panels (e.g., fire alarm control panel 110) or remote devices (e.g., remote devices 120) via the memory (one or more memories 191).

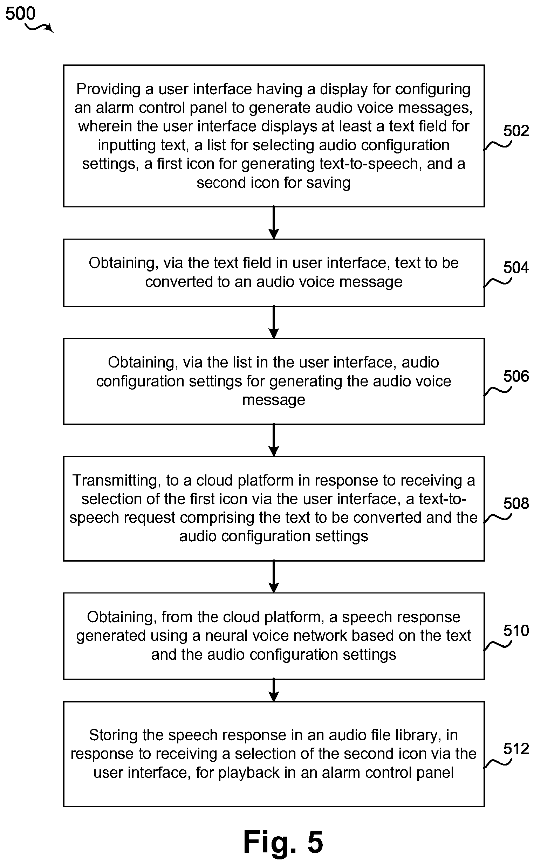

Referring to FIG. 4 and FIG. 5, in operation, computing device 400 may perform a method 500 of configuring an alarm control panel to generate audio voice messages, such as via execution of the audio speech generation component 415 by one or more processors 405 and/or one or more memories 410. Optional aspects are illustrated in dashed lines. The generated audio voice messages may then be loaded onto fire alarm control panels (e.g., fire alarm control panels 110) via a computer readable storage medium.

At block 502, the method 500 includes providing a user interface for configuring an alarm control panel to generate audio voice messages, wherein the user interface displays at least a text field for inputting text, a list for selecting audio configuration settings, a first icon for generating text-to-speech, and a second icon for saving. For example, in an aspect, computing device 400, one or more processors 405, one or more memories 410, audio speech generation component 415, and/or providing component 420 may be configured to or may comprise means for providing a user interface having a display for configuring an alarm control panel to generate audio voice messages, wherein the user interface displays at least a text field for inputting text, a list for selecting audio configuration settings, a first icon for generating text-to-speech, and a second icon for saving. As an example, referring back to FIG. 2, the fire alarm voice generator application 201 may include at least a text field (e.g., text field 205) for inputting text, a drop down menu (e.g., selecting audio configuration settings 213) for selecting audio configuration settings 213, a first icon for generating text-to-speech (e.g., generate speech button 203), and a second icon (e.g., the save button 209) for saving the generated audio video message.

For example, the providing at block 502 may include displaying a user interface for application engineers to easily configure and generate audio voice messages by using a text-to-speech service on a cloud platform. This allows a user to transmit a requested text to be generated in an audio voice message to a text-to-speech service that listens for incoming text-to-speech requests and generates speech based off the user inputs. Any text-to-speech service with a neural language network may be used. In addition, a local text-to-speech service may also be implemented to generate natural sounding voices.

Further, for example, the providing at block 502 may be performed to provide an intuitive and easy to use UI where users may instantaneously generate audio voice messages by using a UI (e.g., the fire alarm voice generator application 201 shown in FIG 2) to input text to be generated into audio speech via a text field. In addition, the user interface also provides different user interface elements to allow a user to easily customize certain audio configuration settings for the requested text including at least one of language, gender, tone, accent, pitch, speech rate, or audio quality setting. The user interface allows the application engineers to instantaneously generate audio voice messages by using a text-to-speech service with a neural language network.

At block 504, the method 500 includes obtaining, via the text field in user interface, text to be converted to an audio voice message. For example, in an aspect, computing device 400, one or more processors 405, one or more memories 410, audio speech generation component 415, and/or obtaining component 425 may be configured to or may comprise means for obtaining, via the text field in user interface, text to be converted to an audio voice message. As an example, referring back to FIG. 2, the text may be input by a user via a text field 205 in the fire alarm voice generator application 201. As another example, referring back to FIG. 3, at block 302, the fire alarm voice generator 301 is configured to obtain text from a user.

For example, the obtaining at block 504 may include obtaining the text to be converted to an audio voice message through a text field 205 displayed within the fire alarm voice generator application 201. In some examples, there may be a second user interface portion with a list of pre-generated phrases where a user may drag and drop selected pre-generated phrases into the text field to generate a new phrase.

Further, for example, the obtaining at block 504 may be performed via the fire alarm voice generator application 201 in order to allow users to easily input and configure text to be generated to an audio voice message. The fire alarm voice generator application 201 also allows an intuitive way for users to input text to a text-to-speech service 221 implemented via a cloud platform.

In an alternative or additional aspect, the text to be converted to the audio voice message is obtained by dragging and dropping pre-generated phrases from a second portion of the user interface, wherein the UI further displays the second portion displaying a list of available pre-generated phrases.

At block 506, the method 500 includes obtaining, via the list in the user interface, audio configuration settings for generating the audio voice message. In an alternative or additional aspect, the audio configuration settings include at least one of: language, gender, tone, accent, pre-set profile, pitch, speech rate, cloud platform engine, or audio quality setting. In an alternative or additional aspect, the audio configuration settings are obtained by loading a pre-configured audio voice profile. For example, in an aspect, computing device 400, one or more processors 405, one or more memories 410, audio speech generation component 415, and/or obtaining component 425 may be configured to or may comprise means for obtaining, via the list in the user interface, audio configuration settings for generating the audio voice message. As an example, referring back to FIG. 2, the audio configuration settings 213 may be chosen and selected via a drop down menu.

For example, the obtaining at block 506 may include obtaining audio configuration settings for generating the audio voice message via a drop down menu containing various audio configuration settings 213.

Further, for example, the obtaining at block 506 may be performed via the drop down menu in order for users to quickly choose combinations of different audio configuration settings and also easily experiment with different combinations of audio configuration settings before storing the generated audio voice message since the audio voice messages are generated instantaneously.

At block 508, the method 500 includes transmitting, to a cloud platform in response to receiving a selection of the first icon via the user interface, a text-to-speech request comprising the text to be converted and the audio configuration settings. For example, in an aspect, computing device 400, one or more processors 405, one or more memories 410, audio speech generation component 415, and/or transmitting component 430 may be configured to or may comprise means for transmitting, to a cloud platform, a text-to-speech request comprising the text to be converted and the audio configuration settings in response to receiving a selection of the first icon via the user interface. As an example, referring back to FIG. 2, the text-to-speech request may be transmitted to a text-to-speech service 221 in response to the user selecting a generate speech button 203 on the fire alarm voice generator application 201. As another example, referring back to FIG. 3, at block 304, the text-to-speech request may be transmitted from the fire alarm voice generator 301 to the cloud platform 303.

For example, the transmitting at block 508 may include transmitting, to a cloud platform, a text-to-speech request comprising the text to be converted and the audio configuration settings to be inputted into a text-to-speech service.

Further, for example, the transmitting at block 508 may be performed via the fire alarm voice generator application 201 to provide an easy and intuitive way to utilize text-to-speech services on a cloud platform.

In an alternative or additional aspect, the text-to-speech request comprises a authentication key, and wherein the speech response is generated from the cloud platform based on the authentication key being validated by the cloud platform.

At block 510, the method 500 includes obtaining, from the cloud platform, a speech response generated using a neural voice network based on the text and the audio configuration settings. For example, in an aspect, computing device 400, one or more processors 405, one or more memories 410, audio speech generation component 415, and/or obtaining component 425 may be configured to or may comprise means for obtaining, from the cloud platform, a speech response generated using a neural voice network based on the text and the audio configuration settings. As an example, referring back to FIG. 3, at block 308, the cloud platform 303 transmits a generated speech response based on the text-to-speech request back to the fire alarm voice generator 301.

For example, the obtaining at block 510 may include obtaining a speech response generated, by a text-to-speech service, using a neural voice network based on the text and the audio configuration settings. For example, a text-to-speech service may be Microsoft Azure's text-to-speech service, which listens for incoming text-to-speech requests and generates speech based off text-to-speech requests. In addition, Azure's text-to-speech service also has a neural voice network that may generate speech audio based on different criteria such as language, speech accent, male/female voice, etc.

Microsoft Azure's text-to-speech service is only an example and the following disclosure should not be limited to utilizing Azure's text-to-speech service. Instead, any text-to-speech service with a deep neural voice network to generate artificial voices from text may be used. In some examples, the text-to-speech services use prebuilt neural voices. In some examples, the text-to-speech services may use custom neural voices.

Further, for example, the obtaining at block 510 may be performed using a text-to-speech service implemented on a cloud platform to minimize memory and processing limitations on the fire alarm voice generator 301. Furthermore, since the text-to-speech service is implemented on the cloud platform, a user may generate speech using the fire alarm voice generator 301 virtually anywhere with an internet connection.

At block 512, the method 500 includes storing the speech response in an audio file library, in response to receiving a selection of the second icon via the user interface, for playback in the alarm control panel. For example, in an aspect, computing device 400, one or more processors 405, one or more memories 410, audio speech generation component 415, and/or storing component 435 may be configured to or may comprise means for storing the speech response in an audio file library, in response to receiving a selection of the second icon via the user interface, for playback in the alarm control panel. As an example, referring back to FIG. 2, a user may store the generated speech response by selecting the save button 209 on the fire alarm voice generator.

For example, the storing at block 512 may include storing the generated speech response to one or more memories (e.g., computer readable storage medium) for importing to a fire control alarm panel (e.g., the fire alarm control panel 110 shown in FIG. 1).

Further, for example, the storing at block 512 may be performed to allow a user to easily store the generated speech responses. In addition, the storing at block 512 also allows a user to easily import the stored speech responses to fire alarm control panels or remote devices using the computer readable storage medium.

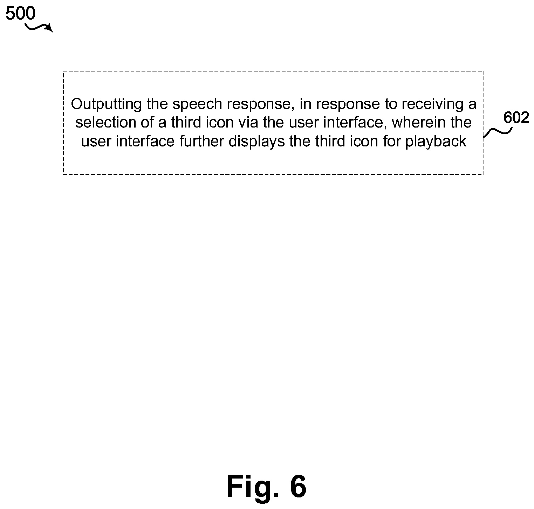

Referring to Fig. 6, in an alternative or additional aspect, at block 602, the method 500 may further include outputting the speech response, in response to receiving a selection of a third icon via the user interface, wherein the user interface further displays the third icon for playback. For example, in an aspect, computing device 400, one or more processors 405, one or more memories 410, audio speech generation component 415, and/or outputting component 440 may be configured to or may comprise means for outputting the speech response, in response to receiving a selection of a third icon via the user interface, wherein the user interface further displays the third icon for playback. As an example, referring back to FIG. 2, the user may select the play button 207 on the fire alarm voice generator to output the speech response. As another example, referring back to FIG. 3, at block 310, the fire alarm voice generator may play the generated speech response.

For example, the outputting at block 602 may include directly using the UI (e.g., the fire alarm voice generator application 201) to playback the generated speech response.

Further, for example, the outputting at block 602 may be performed via the UI to allow a user to instantaneous playback the generated speech response for instant feedback. In addition, the user may also easily and quickly change certain audio configuration settings to experiment with different voices, tones, accents, etc. This in contrast to related systems, where a user must wait a few weeks until a voice actor has recorded the requested text-to-speech request. In addition, it is difficult to a user to request and experiment with different audio configuration settings when a human is recording the requested text-to-speech request. Furthermore, being able to instantaneously playback the generated speech response allows the user to quickly check their requested text-to-speech request to determine whether the generated speech response sounds correct.

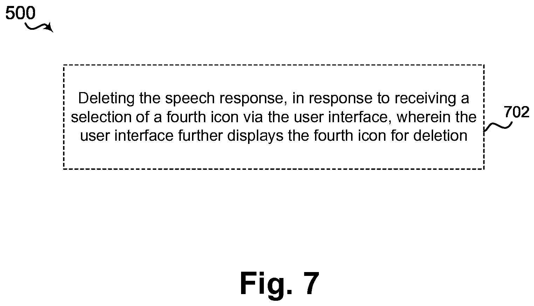

Referring to Fig. 7, in an alternative or additional aspect, at block 702, the method 500 may further include deleting the speech response, in response to receiving a selection of a fourth icon via the user interface, wherein the user interface further displays the fourth icon for deletion. For example, in an aspect, computing device 400, one or more processors 405, one or more memories 410, audio speech generation component 415, and/or deleting component 445 may be configured to or may comprise means for deleting the speech response, in response to receiving a selection of a fourth icon via the user interface, wherein the user interface further displays the fourth icon for deletion.

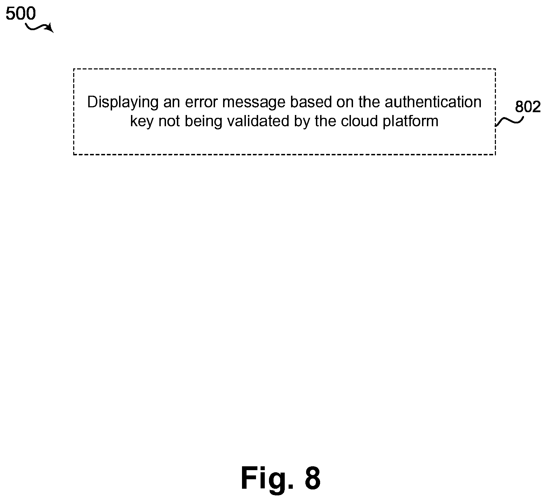

Referring to Fig. 8, in an alternative or additional aspect, at block 802, the method 500 may further include displaying an error message based on the authentication key not being validated by the cloud platform. For example, in an aspect, computing device 400, one or more processors 405, one or more memories 410, audio speech generation component 415, and/or displaying component 450 may be configured to or may comprise means for displaying an error message based on the authentication key not being validated by the cloud platform.

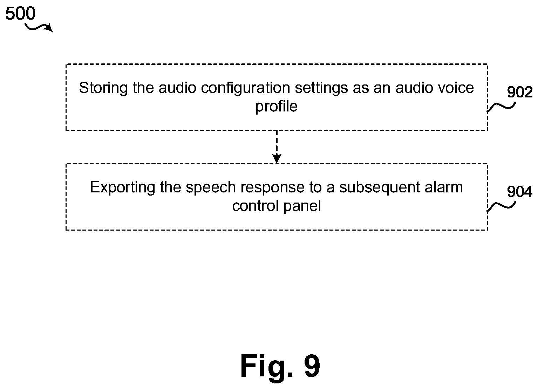

Referring to Fig. 9, in an alternative or additional aspect, at block 902, the method 500 may further include storing the audio configuration settings as an audio voice profile. For example, in an aspect, computing device 400, one or more processors 405, one or more memories 410, audio speech generation component 415, and/or storing component 435 may be configured to or may comprise means for storing the audio configuration settings as an audio voice profile.

For example, the storing at block 902 may include storing the audio configuration settings in an audio profile setting such that the same audio configuration settings may be easily loaded onto different audio generation settings. As an example, a user may generate a batch of audio recordings in one session and save the audio configuration settings to an audio voice profile (e.g., US-CoraNeural as shown in FIG. 2). This allows the user to supplement or replace certain phrases or recordings from the batch of audio recordings at a later time by simply loading the same audio configuration settings from the audio voice profile that was used to record the batch of audio recordings to ensure that any supplemental or replacement phrases will sound consistent with the earlier batch of audio recordings.

In this optional aspect, at block 904, the method 500 may further include exporting the speech response to an alarm control panel. For example, in an aspect, computing device 400, one or more processors 405, one or more memories 410, audio speech generation component 415, and/or exporting component 455 may be configured to or may comprise means for exporting the speech response to an alarm control panel (e.g., the fire alarm control panel 110).

For example, the exporting at block 904 may include storing the generated speech response on a computer readable storage medium or in an audio library. The stored generated speech responses may be loaded onto an alarm control panel (e.g., the fire alarm control panel 110) via the computer readable storage medium.

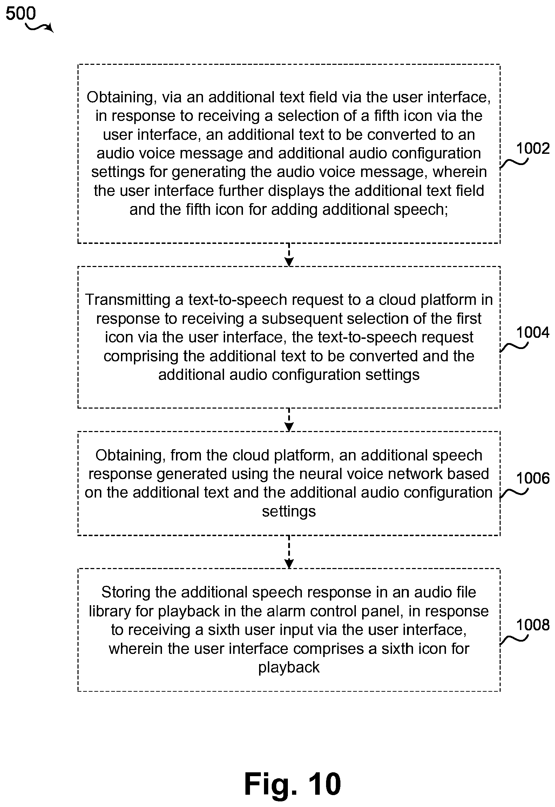

Referring to Fig. 10, in an alternative or additional aspect, at block 1002, the method 500 may further include obtaining, via an additional text field via the user interface, in response to receiving a selection of a fifth icon via the user interface, an additional text to be converted to an audio voice message and additional audio configuration settings for generating the audio voice message, wherein the user interface further displays the additional text field and the fifth icon for adding additional speech;. For example, in an aspect, computing device 400, one or more processors 405, one or more memories 410, audio speech generation component 415, and/or obtaining component 425 may be configured to or may comprise means for obtaining, via an additional text field via the user interface, in response to receiving a selection of a fifth icon via the user interface, an additional text to be converted to an audio voice message and additional audio configuration settings for generating the audio voice message, wherein the user interface further displays the additional text field and the fifth icon for adding additional speech. As an example, referring back to FIG. 2, a user may select the add button 215 to generate another input text field with corresponding play button 207, save button 209, and delete button 211.

In this optional aspect, at block 1004, the method 500 may further include transmitting a text-to-speech request to a cloud platform in response to receiving an additional selection of the first icon via the user interface, the text-to-speech request comprising the additional text to be converted and the additional audio configuration settings. For example, in an aspect, computing device 400, one or more processors 405, one or more memories 410, audio speech generation component 415, and/or transmitting component 430 may be configured to or may comprise means for transmitting a text-to-speech request to a cloud platform in response to receiving another selection of the first icon via the user interface, the text-to-speech request comprising the additional text to be converted and the additional audio configuration settings.

In this optional aspect, at block 1006, the method 500 may further include obtaining, from the cloud platform, an additional speech response generated using the neural voice network based on the additional text and the additional audio configuration settings. For example, in an aspect, computing device 400, one or more processors 405, one or more memories 410, audio speech generation component 415, and/or obtaining component 425 may be configured to or may comprise means for obtaining, from the cloud platform, an additional speech response generated using the neural voice network based on the additional text and the additional audio configuration settings.

In this optional aspect, at block 1008, the method 500 may further include storing the additional speech response in an audio file library for playback in the alarm control panel, in response to receiving a sixth user input via the user interface, wherein the user interface comprises a sixth icon for playback. For example, in an aspect, computing device 400, one or more processors 405, one or more memories 410, audio speech generation component 415, and/or storing component 435 may be configured to or may comprise means for storing the additional speech response in an audio file library for playback in the alarm control panel, in response to receiving a sixth user input via the user interface, wherein the user interface comprises a sixth icon for playback.

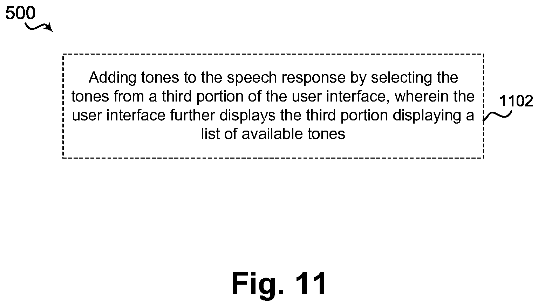

Referring to Fig. 11, in an alternative or additional aspect, at block 1102, the method 500 may further include adding tones to the speech response by selecting the tones from a third portion of the user interface, wherein the user interface further displays the third portion displaying a list of available tones. For example, in an aspect, computing device 400, one or more processors 405, one or more memories 410, audio speech generation component 415, and/or adding component 460 may be configured to or may comprise means for adding tones to the speech response by selecting the tones from a third portion of the user interface, wherein the user interface further displays the third portion displaying a list of available tones.

In some examples, a text-to-speech integration software may be directly integrated into the fire alarm control panel. This would allow for live audio speech processing depending on the fire alarm control panel's status at any moment. For example, if a fire alarm is triggered on a smoke detector on a second floor cafeteria of a building, the fire alarm control panel can use the fire alarm voice generator to generate precise audio messages live. Following the example, the fire alarm control panel may generate and play a message: "Attention, attention. There is a fire on the second floor cafeteria. Please exit to the nearest stairwell."

Aspects of the present disclosure may be implemented as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. Non-transitory computer-readable media explicitly exclude transitory signals.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages.

Aspects of the present disclosure are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various aspects of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Reference in the specification to "one aspect" or "an aspect" of the present disclosure, as well as other variations thereof, means that a particular feature, structure, characteristic, and so forth described in connection with the aspect is included in at least one aspect of the present disclosure. Thus, the appearances of the phrase "in one aspect" or "in an aspect," as well any other variations, appearing in various places throughout the specification are not necessarily all referring to the same aspect.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

It should be understood that the application is not limited to the details or methodology set forth in the following description or illustrated in the figures. It should also be understood that the phraseology and terminology employed herein is for the purpose of description only and should not be regarded as limiting.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method (500) comprising:
a) providing a user interface (201) for configuring an alarm control panel (110) to generate audio voice messages, wherein the user interface (201) displays at least a text field (205) for inputting text, a list for selecting audio configuration settings (213), a first icon (203) for generating text-to-speech, and a second icon (209) for saving;
b) obtaining, via the text field (205) in user interface (201), text to be converted to an audio voice message;
c) recording the own voice of a user;
d) training a neural voice network using the user's recorded voice;
e) obtaining, via the list in the user interface (201), audio configuration settings (213) for generating the audio voice message;
f) transmitting, to a cloud platform (303) in response to receiving a selection of the first icon (203) via the user interface (201), a text-to-speech request comprising the text to be converted and the audio configuration settings (213);
g) obtaining, from the cloud platform (303), a speech response generated using the neural voice network based on the text and the audio configuration settings (213); and
h) storing the speech response in an audio file library, in response to receiving a selection of the second icon (209) via the user interface (201), for playback in the alarm control panel (110).

2. The method (500) of claim 1, further comprising:
- outputting the speech response, in response to receiving a selection of a third icon (207) via the user interface (201), wherein the user interface (201) further displays the third icon (207) for playback.

3. The method (500) of claim 1 or 2, further comprising:
- deleting the speech response, in response to receiving a selection of a fourth icon (211) via the user interface (201), wherein the user interface (201) further displays the fourth icon (211) for deletion.

4. The method (500) of one of claims 1 to 3,
wherein the text-to-speech request comprises a authentication key, and wherein the speech response is generated from the cloud platform (303) based on the authentication key being validated by the cloud platform (303),
wherein the method (500) preferably further comprises:
- displaying an error message based on the authentication key not being validated by the cloud platform (303).

5. The method (500) of one of claims 1 to 4,
wherein the audio configuration settings (213) include at least one of:
language, gender, tone, accent, pre-set profile, pitch, speech rate, cloud platform (303) engine, or audio quality setting; and/or
wherein the audio configuration settings (213) are obtained by loading a pre-configured audio voice profile.

6. The method (500) of one of claims 1 to 5, further comprising:
- storing the audio configuration settings (213) as an audio voice profile; and
- exporting the speech response to an alarm control panel (110).

7. The method (500) of one of claims 1 to 6, further comprising:
- obtaining, via an additional text field (205) via the user interface (201), in response to receiving a selection of a fifth icon (215) via the user interface (201), an additional text to be converted to an audio voice message and additional audio configuration settings (213) for generating the audio voice message, wherein the user interface (201) further displays the additional text field (205) and the fifth icon (215) for adding additional speech;
- transmitting a text-to-speech request to a cloud platform (303) in response to receiving an additional selection of the first icon (203) via the user interface (201), the text-to-speech request comprising the additional text to be converted and the additional audio configuration settings (213);
- obtaining, from the cloud platform (303), an additional speech response generated using the neural voice network based on the additional text and the additional audio configuration settings (213); and
- storing the additional speech response in an audio file library for playback in the alarm control panel (110), in response to receiving a sixth user input via the user interface (201), wherein the user interface (201) comprises a sixth icon for playback.

8. The method (500) of one of claims 1 to 7,
wherein the text to be converted to the audio voice message is obtained by dragging and dropping pre-generated phrases from a second portion of the user interface (201), wherein the user interface (201) further displays the second portion displaying a list of available pre-generated phrases.

9. The method (500) of one of claims 1 to 8, further comprising:
- adding tones to the speech response by selecting the tones from a third portion of the user interface (201), wherein the user interface (201) further displays the third portion displaying a list of available tones.

10. A computing device (400), comprising:
- one or more memories (191), individually or in combination, having instructions; and
- one or more processors (405) each coupled to at least one of the one or more memories (191) and configurable to execute the instructions to:
a) provide a user interface (201) having a display for configuring an alarm control panel (110) to generate audio voice messages, wherein the user interface (201) displays at least a text field (205) for inputting text, a list for selecting audio configuration settings (213), a first icon (203) for generating text-to-speech, and a second icon (209) for saving,
b) obtain, via the text field (205) in user interface (201), text to be converted to an audio voice message,
c) record the own voice of a user;
d) train a neural voice network using the user's recorded voice;
e) obtain, via the list in the user interface (201), audio configuration settings (213) for generating the audio voice message,
f) transmit, to a cloud platform (303) in response to receiving a selection of the first icon (203) via the user interface (201), a text-to-speech request comprising the text to be converted and the audio configuration settings (213),
g) obtain, from the cloud platform (303), a speech response generated using the neural voice network based on the text and the audio configuration settings (213), and
h) store the speech response in an audio file library, in response to receiving a selection of the second icon (209) via the user interface (201), for playback in the alarm control panel (110).

11. The computing device (400) of claim 10,
wherein the one or more processors (405) each coupled to at least one of the one or more memories (191) and configurable to further execute the instructions to:
- output the speech response, in response to receiving a selection of a third icon (207) via the user interface (201), wherein the user interface (201) further displays the third icon (207) for playback; and/or
wherein the one or more processors (405) each coupled to at least one of the one or more memories (191) and configurable to further execute the instructions to:
- delete the speech response, in response to receiving a selection of a fourth icon (211) via the user interface (201), wherein the user interface (201) further displays the fourth icon (211) for deletion; and/or
wherein the text-to-speech request comprises a authentication key, and wherein the speech response is generated from the cloud platform (303) based on the authentication key being validated by the cloud platform (303), an wherein the one or more processors (405) each coupled to at least one of the one or more memories (191) and configurable to further execute the instructions to:
- display an error message based on the authentication key not being validated by the cloud platform (303).

12. The computing device (400) of claim 10 or 11,
wherein the audio configuration settings (213) include at least one of:
language, gender, tone, accent, pre-set profile, pitch, speech rate, cloud platform (303) engine, or audio quality setting; and/or
wherein the audio configuration settings (213) are obtained by loading a pre-configured audio voice profile.

13. The computing device (400) of one of claims 10 to 12,
wherein the one or more processors (405) each coupled to at least one of the one or more memories (191) and configurable to further execute the instructions to:
- store the audio configuration settings (213) as an audio voice profile, and
- export the speech response to an alarm control panel (110).

14. The computing device (400) of one of claims 10 to 13,
wherein the one or more processors (405) each coupled to at least one of the one or more memories (191) and configurable to further execute the instructions to:
- obtain, via an additional text field (205) via the user interface (201), in response to receiving a selection of a fifth icon (215) via the user interface (201), an additional text to be converted to an audio voice message and additional audio configuration settings (213) for generating the audio voice message, wherein the user interface (201) further displays the additional text field (205) and the fifth icon (215) for adding additional speech;
- transmit a text-to-speech request to a cloud platform (303) in response to receiving an additional selection of the first icon (203) via the user interface (201), the text-to-speech request comprising the additional text to be converted and the additional audio configuration settings (213);
- obtain, from the cloud platform (303), an additional speech response generated using the neural voice network based on the additional text and the additional audio configuration settings (213); and
- store the additional speech response in an audio file library for playback in the alarm control panel (110), in response to receiving a sixth user input via the user interface (201), wherein the user interface (201) comprises a sixth icon for playback.

15. A computer program product configured to configure audio voice messages, the computer program product comprising one or more non-transitory computer-readable media, having instructions stored thereon that when executed by one or more processors (405) cause the one or more processors (405), individually or in combination, to perform a method (500) comprising:
a) providing a user interface (201) having a display for configuring an alarm control panel (110) to generate audio voice messages, wherein the user interface (201) displays at least a text field (205) for inputting text, a list for selecting audio configuration settings (213), a first icon (203) for generating text-to-speech, and a second icon (209) for saving;
b) obtaining, via the text field (205) in user interface (201), text to be converted to an audio voice message;
c) recording the own voice of a user;
d) training a neural voice network using the user's recorded voice;
e) obtaining, via the list in the user interface (201), audio configuration settings (213) for generating the audio voice message;
f) transmitting, to a cloud platform (303) in response to receiving a selection of the first icon (203) via the user interface (201), a text-to-speech request comprising the text to be converted and the audio configuration settings (213);
g) obtaining, from the cloud platform (303), a speech response generated using a neural voice network based on the text and the audio configuration settings (213); and
h) storing the speech response in an audio file library, in response to receiving a selection of the second icon (209) via the user interface (201), for playback in the alarm control panel (110).

## Patentansprüche

1. Verfahren (500), umfassend:
a) Bereitstellen einer Benutzeroberfläche (201) zum Konfigurieren eines Alarm-Bedienfelds (110) zum Erzeugen von Audio-Sprachnachrichten, wobei die Benutzeroberfläche (201) mindestens ein Textfeld (205) zur Texteingabe, eine Liste zur Auswahl von Audiokonfigurationseinstellungen (213), ein erstes Symbol (203) zum Erzeugen von Text-zu-Sprache und ein zweites Symbol (209) zum Speichern anzeigt;
b) Erhalten eines Textes über das Textfeld (205) in der Benutzeroberfläche (201), der in eine Audio-Sprachnachricht umgewandelt werden soll;
c) Aufzeichnen der eigenen Stimme eines Nutzers;
d) Trainieren eines neuronalen Sprachnetzwerks unter Verwendung der aufgezeichneten Stimme des Benutzers;
e) Erhalten von Audiokonfigurationseinstellungen (213) zum Erzeugen der Audio-Sprachnachricht über die Liste in der Benutzeroberfläche (201);
f) Übertragen einer Text-zu-Sprache-Anfrage, umfassend den umzuwandelnden Text und die Audiokonfigurationseinstellungen (213), als Reaktion auf das Empfangen einer Auswahl des ersten Symbols (203) über die Benutzeroberfläche (201), an eine Cloud-Plattform (303);
g) Erhalten einer Sprachantwort von der Cloud-Plattform (303), die unter Verwendung des neuronalen Sprachnetzwerks auf der Grundlage des Textes und der Audiokonfigurationseinstellungen (213) generiert wurde; und
h) Speichern der Sprachantwort in einer Audiodateibibliothek als Reaktion auf das Empfangen einer Auswahl des zweiten Symbols (209) über die Benutzeroberfläche (201) zur Wiedergabe im Alarm-Bedienfeld (110).

2. Verfahren (500) nach Anspruch 1, ferner umfassend:
- Ausgeben der Sprachantwort als Reaktion auf das Empfangen einer Auswahl eines dritten Symbols (207) über die Benutzeroberfläche (201), wobei die Benutzeroberfläche (201) ferner das dritte Symbol (207) zur Wiedergabe anzeigt.

3. Verfahren (500) nach Anspruch 1 oder 2, ferner umfassend:
- Löschen der Sprachantwort als Reaktion auf das Empfangen einer Auswahl eines vierten Symbols (211) über die Benutzeroberfläche (201), wobei die Benutzeroberfläche (201) ferner das vierte Symbol (211) zum Löschen anzeigt.

4. Verfahren (500) nach einem der Ansprüche 1 bis 3,
wobei die Text-zu-Sprache-Anfrage einen Authentifizierungsschlüssel umfasst und wobei die Sprachantwort von der Cloud-Plattform (303) auf der Grundlage der Validierung des Authentifizierungsschlüssels durch die Cloud-Plattform (303) erzeugt wird,
wobei das Verfahren (500) vorzugsweise ferner umfasst:
- Anzeigen einer Fehlermeldung auf der Grundlage der Nicht-Validierung des Authentifizierungsschlüssels durch die Cloud-Plattform (303).

5. Verfahren (500) nach einem der Ansprüche 1 bis 4,
wobei die Audiokonfigurationseinstellungen (213) mindestens eines der folgenden Elemente einschließen: Sprache, Geschlecht, Ton, Akzent, voreingestelltes Profil, Tonhöhe, Sprechgeschwindigkeit, Engine der Cloud-Plattform (303) oder Einstellung der Audioqualität; und/oder
wobei die Audiokonfigurationseinstellungen (213) durch Laden eines vorkonfigurierten Audio-Stimmprofils erhalten werden.

6. Verfahren (500) nach einem der Ansprüche 1 bis 5, ferner umfassend:
- Speichern der Audiokonfigurationseinstellungen (213) als ein Audio-Stimmprofil; und
- Exportieren der Sprachantwort an ein Alarm-Bedienfeld (110).

7. Verfahren (500) nach einem der Ansprüche 1 bis 6, ferner umfassend:
- Erhalten eines zusätzlichen Textes, der in eine Audio-Sprachnachricht umgewandelt werden soll, sowie zusätzlicher Audiokonfigurationseinstellungen (213) zum Erzeugen der Audio-Sprachnachricht über ein zusätzliches Textfeld (205) über die Benutzeroberfläche (201) als Reaktion auf das Empfangen einer Auswahl eines fünften Symbols (215) über die Benutzeroberfläche (201), wobei die Benutzeroberfläche (201) ferner das zusätzliche Textfeld (205) und das fünfte Symbol (215) zum Hinzufügen zusätzlicher Sprache anzeigt;
- Übertragen einer Text-zu-Sprache-Anfrage an eine Cloud-Plattform (303) als Reaktion auf das Empfangen einer zusätzlichen Auswahl des ersten Symbols (203) über die Benutzeroberfläche (201), wobei die Text-zu-Sprache-Anfrage den umzuwandelnden zusätzlichen Text und die zusätzlichen Audiokonfigurationseinstellungen (213) umfasst;
- Erhalten einer zusätzlichen Sprachantwort von der Cloud-Plattform (303), die unter Verwendung eines neuronalen Sprachnetzwerks auf der Grundlage des zusätzlichen Textes und der zusätzlichen Audiokonfigurationseinstellungen (213) generiert wurde; und
- Speichern der zusätzlichen Sprachantwort in einer Audiodateibibliothek zur Wiedergabe im Alarm-Bedienfeld (110) als Reaktion auf das Empfangen einer sechsten Benutzereingabe über die Benutzeroberfläche (201), wobei die Benutzeroberfläche (201) ein sechstes Symbol zur Wiedergabe umfasst.

8. Verfahren (500) nach einem der Ansprüche 1 bis 7,
wobei der Text, der in die Audio-Sprachnachricht umgewandelt werden soll, durch Ziehen und Ablegen vorgefertigter Phrasen aus einem zweiten Bereich der Benutzeroberfläche (201) erhalten wird, wobei die Benutzeroberfläche (201) ferner den zweiten Bereich anzeigt, der eine Liste verfügbarer vorgefertigter Phrasen anzeigt.

9. Verfahren (500) nach einem der Ansprüche 1 bis 8, ferner umfassend:
- Hinzufügen von Tönen zur Sprachantwort durch Auswahl der Töne aus einem dritten Bereich der Benutzeroberfläche (201), wobei die Benutzeroberfläche (201) ferner den dritten Bereich anzeigt, der eine Liste verfügbarer Töne anzeigt.

10. Rechenvorrichtung (400), umfassend:
- einen oder mehrere Speicher (191), einzeln oder in Kombination, die Befehle enthalten; und
- einen oder mehrere Prozessoren (405), die jeweils mit mindestens einem der einen oder mehreren Speicher (191) verbunden und konfigurierbar sind, um die folgenden Befehle auszuführen:
a) Bereitstellen einer Benutzeroberfläche (201) mit einer Anzeige zum Konfigurieren eines Alarm-Bedienfelds (110) zum Erzeugen von Audio-Sprachnachrichten, wobei die Benutzeroberfläche (201) mindestens ein Textfeld (205) zur Texteingabe, eine Liste zur Auswahl von Audiokonfigurationseinstellungen (213), ein erstes Symbol (203) zum Erzeugen von Text-zu-Sprache und ein zweites Symbol (209) zum Speichern anzeigt,
b) Erhalten eines Textes über das Textfeld (205) in der Benutzeroberfläche (201), der in eine Audio-Sprachnachricht umgewandelt werden soll,
c) Aufzeichnen der eigenen Stimme eines Nutzers;
d) Trainieren eines neuronalen Sprachnetzwerks unter Verwendung der aufgezeichneten Stimme des Benutzers;
e) Erhalten von Audiokonfigurationseinstellungen (213) zum Erzeugen der Audio-Sprachnachricht über die Liste in der Benutzeroberfläche (201),
f) Übertragen einer Text-zu-Sprache-Anfrage, umfassend den umzuwandelnden Text und die Audiokonfigurationseinstellungen (213), als Reaktion auf das Empfangen einer Auswahl des ersten Symbols (203) über die Benutzeroberfläche (201), an eine Cloud-Plattform (303),
g) Erhalten einer Sprachantwort von der Cloud-Plattform (303), die unter Verwendung des neuronalen Sprachnetzwerks auf der Grundlage des Textes und der Audiokonfigurationseinstellungen (213) generiert wurde, und
h) Speichern der Sprachantwort in einer Audiodateibibliothek als Reaktion auf das Empfangen einer Auswahl des zweiten Symbols (209) über die Benutzeroberfläche (201) zur Wiedergabe im Alarm-Bedienfeld (110).

11. Rechenvorrichtung (400) nach Anspruch 10,
wobei der eine oder die mehreren Prozessoren (405) jeweils mit mindestens einem der einen oder mehreren Speicher (191) verbunden und konfigurierbar sind, um ferner die folgenden Befehle auszuführen:
- Ausgeben der Sprachantwort als Reaktion auf das Empfangen einer Auswahl eines dritten Symbols (207) über die Benutzeroberfläche (201), wobei die Benutzeroberfläche (201) ferner das dritte Symbol (207) zur Wiedergabe anzeigt; und/oder
wobei der eine oder die mehreren Prozessoren (405) jeweils mit mindestens einem der einen oder mehreren Speicher (191) verbunden und konfigurierbar sind, um ferner die folgenden Befehle auszuführen:
- Löschen der Sprachantwort als Reaktion auf das Empfangen einer Auswahl eines vierten Symbols (211) über die Benutzeroberfläche (201), wobei die Benutzeroberfläche (201) ferner das vierte Symbol (211) zum Löschen anzeigt; und/oder
wobei die Text-zu-Sprache-Anfrage einen Authentifizierungsschlüssel umfasst und wobei die Sprachantwort von der Cloud-Plattform (303) auf der Grundlage der Validierung des Authentifizierungsschlüssels durch die Cloud-Plattform (303) erzeugt wird, und wobei der eine oder die mehreren Prozessoren (405) jeweils mit mindestens einem der einen oder mehreren Speicher (191) verbunden und konfigurierbar sind, um ferner die folgenden Befehle auszuführen:
- Anzeigen einer Fehlermeldung auf der Grundlage der Nicht-Validierung des Authentifizierungsschlüssels durch die Cloud-Plattform (303).

12. Rechenvorrichtung (400) nach Anspruch 10 oder 11,
wobei die Audiokonfigurationseinstellungen (213) mindestens eines der folgenden Elemente einschließen: Sprache, Geschlecht, Ton, Akzent, voreingestelltes Profil, Tonhöhe, Sprechgeschwindigkeit, Engine der Cloud-Plattform (303) oder Einstellung der Audioqualität; und/oder
wobei die Audiokonfigurationseinstellungen (213) durch Laden eines vorkonfigurierten Audio-Stimmprofils erhalten werden.

13. Rechenvorrichtung (400) nach einem der Ansprüche 10 bis 12,
wobei der eine oder die mehreren Prozessoren (405) jeweils mit mindestens einem der einen oder mehreren Speicher (191) verbunden und konfigurierbar sind, um ferner die folgenden Befehle auszuführen:
- Speichern der Audiokonfigurationseinstellungen (213) als ein Audio-Stimmprofil, und
- Exportieren der Sprachantwort an ein Alarm-Bedienfeld (110).

14. Rechenvorrichtung (400) nach einem der Ansprüche 10 bis 13,
wobei der eine oder die mehreren Prozessoren (405) jeweils mit mindestens einem der einen oder mehreren Speicher (191) verbunden und konfigurierbar sind, um ferner die folgenden Befehle auszuführen:
- Erhalten eines zusätzlichen Textes, der in eine Audio-Sprachnachricht umgewandelt werden soll, sowie zusätzlicher Audiokonfigurationseinstellungen (213) zum Erzeugen der Audio-Sprachnachricht über ein zusätzliches Textfeld (205) über die Benutzeroberfläche (201) als Reaktion auf das Empfangen einer Auswahl eines fünften Symbols (215) über die Benutzeroberfläche (201), wobei die Benutzeroberfläche (201) ferner das zusätzliche Textfeld (205) und das fünfte Symbol (215) zum Hinzufügen zusätzlicher Sprache anzeigt;
- Übertragen einer Text-zu-Sprache-Anfrage an eine Cloud-Plattform (303) als Reaktion auf das Empfangen einer zusätzlichen Auswahl des ersten Symbols (203) über die Benutzeroberfläche (201), wobei die Text-zu-Sprache-Anfrage den umzuwandelnden zusätzlichen Text und die zusätzlichen Audiokonfigurationseinstellungen (213) umfasst;
- Erhalten einer zusätzlichen Sprachantwort von der Cloud-Plattform (303), die unter Verwendung eines neuronalen Sprachnetzwerks auf der Grundlage des zusätzlichen Textes und der zusätzlichen Audiokonfigurationseinstellungen (213) generiert wurde; und
- Speichern der zusätzlichen Sprachantwort in einer Audiodateibibliothek zur Wiedergabe im Alarm-Bedienfeld (110) als Reaktion auf das Empfangen einer sechsten Benutzereingabe über die Benutzeroberfläche (201), wobei die Benutzeroberfläche (201) ein sechstes Symbol zur Wiedergabe umfasst.

15. Computerprogrammprodukt, das konfiguriert ist, um Audio-Sprachnachrichten zu konfigurieren, wobei das Computerprogrammprodukt ein oder mehrere nicht-transitorische computerlesbare Medien umfasst, auf denen Befehle gespeichert sind, die, wenn sie von einem oder mehreren Prozessoren (405) ausgeführt werden, den einen oder die mehreren Prozessoren (405), einzeln oder in Kombination, veranlassen, ein Verfahren (500) auszuführen, umfassend:
a) Bereitstellen einer Benutzeroberfläche (201) mit einer Anzeige zum Konfigurieren eines Alarm-Bedienfelds (110) zum Erzeugen von Audio-Sprachnachrichten, wobei die Benutzeroberfläche (201) mindestens ein Textfeld (205) zur Texteingabe, eine Liste zur Auswahl von Audiokonfigurationseinstellungen (213), ein erstes Symbol (203) zum Erzeugen von Text-zu-Sprache und ein zweites Symbol (209) zum Speichern anzeigt;
b) Erhalten eines Textes über das Textfeld (205) in der Benutzeroberfläche (201), der in eine Audio-Sprachnachricht umgewandelt werden soll;
c) Aufzeichnen der eigenen Stimme eines Nutzers;
d) Trainieren eines neuronalen Sprachnetzwerks unter Verwendung der aufgezeichneten Stimme des Benutzers;
e) Erhalten von Audiokonfigurationseinstellungen (213) zum Erzeugen der Audio-Sprachnachricht über die Liste in der Benutzeroberfläche (201);
f) Übertragen einer Text-zu-Sprache-Anfrage, umfassend den umzuwandelnden Text und die Audiokonfigurationseinstellungen (213), als Reaktion auf das Empfangen einer Auswahl des ersten Symbols (203) über die Benutzeroberfläche (201), an eine Cloud-Plattform (303);
g) Erhalten einer Sprachantwort von der Cloud-Plattform (303), die unter Verwendung eines neuronalen Sprachnetzwerks auf der Grundlage des Textes und der Audiokonfigurationseinstellungen (213) generiert wurde; und
h) Speichern der Sprachantwort in einer Audiodateibibliothek als Reaktion auf das Empfangen einer Auswahl des zweiten Symbols (209) über die Benutzeroberfläche (201) zur Wiedergabe im Alarm-Bedienfeld (110).

## Revendications

1. Procédé (500) comprenant :
a) la fourniture d'une interface utilisateur (201) permettant de configurer un panneau de contrôle d'alarme (110) pour générer des messages vocaux audio, dans lequel l'interface utilisateur (201) affiche au moins un champ de texte (205) permettant d'entrer du texte, une liste permettant de sélectionner des paramètres de configuration audio (213), une première icône (203) permettant de générer une synthèse vocale, et une deuxième icône (209) permettant d'enregistrer ;
b) l'obtention, par le biais du champ de texte (205) dans l'interface utilisateur (201), du texte à convertir en message vocal audio ;
c) l'enregistrement de la propre voix d'un utilisateur ;
d) l'entraînement d'un réseau vocal neuronal à l'aide de la voix enregistrée de l'utilisateur ;
e) l'obtention, par le biais de la liste dans l'interface utilisateur (201), des paramètres de configuration audio (213) permettant de générer le message vocal audio ;
f) la transmission, à une plateforme cloud (303) en réponse à la réception d'une sélection de la première icône (203) par le biais de l'interface utilisateur (201), d'une requête de synthèse vocale comprenant le texte à convertir et les paramètres de configuration audio (213) ;
g) l'obtention, à partir de la plateforme cloud (303), d'une réponse vocale générée à l'aide du réseau vocal neuronal sur la base du texte et des paramètres de configuration audio (213) ; et
h) le stockage de la réponse vocale dans une bibliothèque de fichiers audio, en réponse à la réception d'une sélection de la deuxième icône (209) par le biais de l'interface utilisateur (201), à des fins de lecture dans le panneau de contrôle d'alarme (110).

2. Procédé (500) selon la revendication 1, comprenant en outre :
- la sortie de la réponse vocale, en réponse à la réception d'une sélection d'une troisième icône (207) par le biais de l'interface utilisateur (201), dans lequel l'interface utilisateur (201) affiche en outre la troisième icône (207) à des fins de lecture.

3. Procédé (500) selon la revendication 1 ou 2, comprenant en outre :
- la suppression de la réponse vocale, en réponse à la réception d'une sélection d'une quatrième icône (211) par le biais de l'interface utilisateur (201), dans lequel l'interface utilisateur (201) affiche en outre la quatrième icône (211) à des fins de suppression.

4. Procédé (500) selon l'une des revendications 1 à 3,
dans lequel la requête de synthèse vocale comprend une clé d'authentification, et dans lequel la réponse vocale est générée à partir de la plateforme cloud (303) sur la base de la clé d'authentification étant validée par la plateforme cloud (303),
dans lequel le procédé (500) comprend de préférence en outre :
- l'affichage d'un message d'erreur sur la base de la clé d'authentification n'étant pas validée par la plateforme cloud (303).

5. Procédé (500) selon l'une des revendications 1 à 4,
dans lequel les paramètres de configuration audio (213) comportent au moins l'un parmi les éléments suivants : la langue, le sexe, le ton, l'accent, le profil prédéfini, la hauteur, le débit de parole, le moteur de plateforme cloud (303) ou le paramètre de qualité audio ; et/ou
dans lequel les paramètres de configuration audio (213) sont obtenus en chargeant un profil vocal audio préconfiguré.

6. Procédé (500) selon l'une quelconques des revendications 1 à 5, comprenant en outre :
- le stockage des paramètres de configuration audio (213) sous la forme d'un profil vocal audio ; et
- l'exportation de la réponse vocale vers un panneau de contrôle d'alarme (110).

7. Procédé (500) selon l'une quelconques des revendications 1 à 6, comprenant en outre :
- l'obtention, par le biais d'un champ de texte supplémentaire (205) par le biais de l'interface utilisateur (201), en réponse à la réception d'une sélection d'une cinquième icône (215) par le biais de l'interface utilisateur (201), d'un texte supplémentaire à convertir en message vocal audio et des paramètres de configuration audio supplémentaires (213) permettant de générer le message vocal audio, dans lequel l'interface utilisateur (201) affiche en outre le champ de texte supplémentaire (205) et la cinquième icône (215) permettant d'ajouter une parole supplémentaire ;
- la transmission d'une requête de synthèse vocale à une plateforme cloud (303) en réponse à la réception d'une sélection supplémentaire de la première icône (203) par le biais de l'interface utilisateur (201), la requête de synthèse vocale comprenant le texte supplémentaire à convertir et les paramètres de configuration audio supplémentaires (213) ;
- l'obtention, à partir de la plateforme cloud (303), d'une réponse vocale supplémentaire générée à l'aide du réseau vocal neuronal sur la base du texte supplémentaire et des paramètres de configuration audio supplémentaires (213) ; et
- le stockage de la réponse vocale supplémentaire dans une bibliothèque de fichiers audio à des fins de lecture dans le panneau de contrôle d'alarme (110), en réponse à la réception d'une sixième entrée utilisateur par le biais de l'interface utilisateur (201), dans lequel l'interface utilisateur (201) comprend une sixième icône à des fins de lecture.

8. Procédé (500) selon l'une quelconque des revendications 1 à 7,
dans lequel le texte à convertir en message vocal audio est obtenu par glisser-déposer de phrases prédéfinies à partir d'une deuxième partie de l'interface utilisateur (201), dans lequel l'interface utilisateur (201) affiche en outre la deuxième partie affichant une liste des phrases pré-générées disponibles.

9. Procédé (500) selon l'une quelconques des revendications 1 à 8, comprenant en outre :
- l'ajout de tons à la réponse vocale en sélectionnant les tons dans une troisième partie de l'interface utilisateur (201), dans lequel l'interface utilisateur (201) affiche en outre la troisième partie affichant une liste des tons disponibles.

10. Dispositif informatique (400) comprenant :
- une ou plusieurs mémoires (191), utilisées individuellement ou en combinaison, ayant des instructions ; et
- un ou plusieurs processeurs (405) chacun étant couplé à au moins l'une parmi la ou les mémoires (191) et configurable pour exécuter les instructions destinées à :
a) fournir une interface utilisateur (201) ayant un écran permettant de configurer un panneau de contrôle d'alarme (110) pour générer des messages vocaux audio, dans lequel l'interface utilisateur (201) affiche au moins un champ de texte (205) permettant d'entrer du texte, une liste permettant de sélectionner des paramètres de configuration audio (213), une première icône (203) permettant de générer une synthèse vocale, et une deuxième icône (209) permettant d'enregistrer,
b) obtenir, par le biais du champ de texte (205) dans l'interface utilisateur (201), le texte à convertir en message vocal audio,
c) enregistrer la propre voix d'un utilisateur ;
d) entraîner un réseau vocal neuronal à l'aide de la voix enregistrée de l'utilisateur ;
e) obtenir, par le biais de la liste dans l'interface utilisateur (201), les paramètres de configuration audio (213) permettant de générer le message vocal audio,
f) transmettre, à une plateforme cloud (303) en réponse à la réception d'une sélection de la première icône (203) par le biais de l'interface utilisateur (201), une requête de synthèse vocale comprenant le texte à convertir et les paramètres de configuration audio (213),
g) obtenir, à partir de la plateforme cloud (303), une réponse vocale générée à l'aide du réseau vocal neuronal sur la base du texte et des paramètres de configuration audio (213), et
h) stocker la réponse vocale dans une bibliothèque de fichiers audio, en réponse à la réception d'une sélection de la deuxième icône (209) par le biais de l'interface utilisateur (201), à des fins de lecture dans le panneau de contrôle d'alarme (110).

11. Dispositif informatique (400) selon la revendication 10,
dans lequel le ou les processeurs (405) sont chacun couplés à au moins l'une parmi la ou les mémoires (191) et configurables pour exécuter en outre les instructions destinées à :
- sortir la réponse vocale, en réponse à la réception d'une sélection d'une troisième icône (207) par le biais de l'interface utilisateur (201), dans lequel l'interface utilisateur (201) affiche en outre la troisième icône (207) à des fins de lecture ; et/ou
dans lequel le ou les processeurs (405) chacun étant couplé à au moins l'une parmi la ou les mémoires (191) et configurable pour exécuter en outre les instructions destinées à :
- supprimer la réponse vocale, en réponse à la réception d'une sélection d'une quatrième icône (211) par le biais de l'interface utilisateur (201), dans lequel l'interface utilisateur (201) affiche en outre la quatrième icône (211) à des fins de suppression ; et/ou
dans lequel la requête de synthèse vocale comprend une clé d'authentification, et dans lequel la réponse vocale est générée à partir de la plateforme cloud (303) sur la base de la clé d'authentification étant validée par la plateforme cloud (303), et dans lequel le ou les processeurs (405) sont chacun couplés à au moins l'une parmi la ou les mémoires (191) et configurables pour exécuter en outre les instructions destinées à :
- afficher un message d'erreur sur la base de la clé d'authentification n'étant pas validée par la plateforme cloud (303).

12. Dispositif informatique (400) selon la revendication 10 ou 11,
dans lequel les paramètres de configuration audio (213) comportent au moins l'un parmi les éléments suivants : la langue, le sexe, le ton, l'accent, le profil prédéfini, la hauteur, le débit de parole, le moteur de plateforme cloud (303) ou le paramètre de qualité audio ; et/ou
dans lequel les paramètres de configuration audio (213) sont obtenus en chargeant un profil vocal audio préconfiguré.

13. Dispositif informatique (400) selon l'une quelconque des revendications 10 à 12,
dans lequel le ou les processeurs (405) sont chacun couplés à au moins l'une parmi la ou les mémoires (191) et configurables pour exécuter en outre les instructions destinées à :
- stocker les paramètres de configuration audio (213) sous la forme d'un profil vocal audio, et
- exporter la réponse vocale vers un panneau de contrôle d'alarme (110).

14. Dispositif informatique (400) selon l'une quelconque des revendications 10 à 13,
dans lequel le ou les processeurs (405) sont chacun couplés à au moins l'une parmi la ou les mémoires (191) et configurables pour exécuter en outre les instructions destinées à :
- obtenir, par le biais d'un champ de texte supplémentaire (205) par le biais de l'interface utilisateur (201), en réponse à la réception d'une sélection d'une cinquième icône (215) par le biais de l'interface utilisateur (201), un texte supplémentaire à convertir en message vocal audio et des paramètres de configuration audio supplémentaires (213) permettant de générer le message vocal audio, dans lequel l'interface utilisateur (201) affiche en outre le champ de texte supplémentaire (205) et la cinquième icône (215) permettant d'ajouter une parole supplémentaire ;
- transmettre une requête de synthèse vocale à une plateforme cloud (303) en réponse à la réception d'une sélection supplémentaire de la première icône (203) par le biais de l'interface utilisateur (201), la requête de synthèse vocale comprenant le texte supplémentaire à convertir et les paramètres de configuration audio supplémentaires (213) ;
- obtenir, à partir de la plateforme cloud (303), une réponse vocale supplémentaire générée à l'aide du réseau vocal neuronal sur la base du texte supplémentaire et des paramètres de configuration audio supplémentaires (213) ; et
- stocker la réponse vocale supplémentaire dans une bibliothèque de fichiers audio à des fins de lecture dans le panneau de contrôle d'alarme (110), en réponse à la réception d'une sixième entrée utilisateur par le biais de l'interface utilisateur (201), dans lequel l'interface utilisateur (201) comprend une sixième icône à des fins de lecture.

15. Produit de programme informatique configuré pour configurer des messages vocaux audio, le produit de programme informatique comprenant un ou plusieurs supports lisibles par ordinateur non transitoires, ayant des instructions stockées sur ceux-ci qui lorsqu'elles sont exécutées par un ou plusieurs processeurs (405) amènent le ou les processeurs (405), individuellement ou en combinaison, à réaliser un procédé (500) comprenant :
a) la fourniture d'une interface utilisateur (201) ayant un écran permettant de configurer un panneau de contrôle d'alarme (110) pour générer des messages vocaux audio, dans lequel l'interface utilisateur (201) affiche au moins un champ de texte (205) permettant d'entrer du texte, une liste permettant de sélectionner des paramètres de configuration audio (213), une première icône (203) permettant de générer une synthèse vocale, et une deuxième icône (209) permettant d'enregistrer ;
b) l'obtention, par le biais du champ de texte (205) dans l'interface utilisateur (201), du texte à convertir en message vocal audio ;
c) l'enregistrement de la propre voix d'un utilisateur ;
d) l'entraînement d'un réseau vocal neuronal à l'aide de la voix enregistrée de l'utilisateur ;
e) l'obtention, par le biais de la liste dans l'interface utilisateur (201), des paramètres de configuration audio (213) permettant de générer le message vocal audio ;
f) la transmission, à une plateforme cloud (303) en réponse à la réception d'une sélection de la première icône (203) par le biais de l'interface utilisateur (201), d'une requête de synthèse vocale comprenant le texte à convertir et les paramètres de configuration audio (213) ;
g) l'obtention, à partir de la plateforme cloud (303), d'une réponse vocale générée à l'aide d'un réseau vocal neuronal sur la base du texte et des paramètres de configuration audio (213) ; et
h) le stockage de la réponse vocale dans une bibliothèque de fichiers audio, en réponse à la réception d'une sélection de la deuxième icône (209) par le biais de l'interface utilisateur (201), à des fins de lecture dans le panneau de contrôle d'alarme (110).
